(19) Europäisches Patentamt
European Patent Office
Office européen des brevets

(11) **EP 3 073 241 A1**

(12) **EUROPEAN PATENT APPLICATION**

(43) Date of publication:
**28.09.2016 Bulletin 2016/39**

(51) Int Cl.:
*G01M 9/06* (2006.01)    *G01M 5/00* (2006.01)
*F03D 7/02* (2006.01)    *F03D 13/00* (2016.01)

(21) Application number: **14195427.1**

(22) Date of filing: **28.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventor: **Mayda, Edward A.**
**Thornton, CO 80602 (US)**

(54) **Analyzing the boundary layer of a rotor blade**

(57) The invention relates to an arrangement for analyzing the boundary layer (30) of a rotor blade (20) for a wind turbine (10). The arrangement comprises a first pressure sensing unit (41) located at the trailing edge section (23) of the rotor blade (20), a second pressure sensing unit (42) located upstream of the first pressure sensing unit (41), and a device (43) for determining the differential pressure between the first pressure sensing unit (41) and the second pressure sensing unit (42). Furthermore, the arrangement is arranged and prepared for comparing the determined differential pressure with a reference differential pressure, such that the boundary layer (30) of the rotor blade (20) can be characterized. The invention is furthermore related to a method of analyzing the boundary layer (30) of a rotor blade (20) for a wind turbine (10) and to the use of such a method for determining whether the boundary layer (30) of the rotor blade (20) is separated at a predetermined chordwise position (51) of the rotor blade.

FIG 4

EP 3 073 241 A1

**Description**

The present invention relates to an arrangement for analyzing the boundary layer of a rotor blade for a wind turbine. The invention is furthermore related to a method of analyzing the boundary layer of a rotor blade for a wind turbine and to the use of such a method for determining whether the boundary layer of the rotor blade is separated at a predetermined chordwise position of the rotor blade.

At present, there are no physically robust methods for determining the state of the boundary layer at the trailing edge section of a rotor blade of a wind turbine, which are deployable on commercially operating wind turbines. It would be advantageous to know whether or not the boundary layer is attached or separated because these two states have dramatically different performance and acoustic properties. In general, performance declines and noise emissions increase when a separation of the boundary layer is present.

Thus, the object of the present invention is to provide means for characterizing the boundary layer of a rotor blade for a wind turbine.

The object is solved by the independent claims. Advantageous developments and modifications are described in the dependent claims.

According to the invention there is provided an arrangement for analyzing the boundary layer of a rotor blade for a wind turbine. The arrangement comprises a first pressure sensing unit located at a trailing edge section of the rotor blade, a second pressure sensing unit located upstream of the first pressure sensing unit, and a device for determining the differential pressure between the first pressure sensing unit and the second pressure sensing unit. The arrangement comprises an evaluation unit, which is connected with the device, and which is arranged and prepared for comparing the determined differential pressure with a reference differential pressure, such that the boundary layer of the rotor blade is characterized by the evaluation unit.

Such an arrangement has numerous advantages for the operation of a wind turbine. In principle, avoiding boundary layer separation leads to a better performance of the wind turbine and may consequently also lead to a better performance of the wind farm comprising the wind turbine.

A first advantage is that routine detection of stall events, i.e. detection of a flow separation of the boundary layer, could be used by a controller to correct or report the issue.

As another advantage, the operation of the wind turbine could adaptively be curtailed if low noise operation is desired.

Another advantage of the described arrangement is that blade soiling could be detected since separation of the boundary layer is commonly more frequent when rotor blades are soiled compared to clean rotor blades.

Yet another advantage is the possibility of detection of extreme wind shear or yaw error.

Yet another advantage is that the wind turbine can be adaptively operated more aggressively in order to increase the energy production of the wind turbine.

Particularly the latter point has not yet been addressed properly in the state of the art. Currently, in practice, wind turbines are commonly controlled in a conservative manner in order to ensure that the rotor blades are unlikely to encounter boundary layer separation under normal operating conditions. A wind turbine with the described arrangement has, for instance, the advantage that the pitch angle can be chosen differently such that the rotor blade can be operated more aggressively.

The differential pressure can be determined by measuring a first pressure by the first pressure sensing unit, measuring the second pressure by the second pressure sensing unit and subtracting the first pressure by the second pressure or vice versa. In other words, an absolute value for the first pressure is determined, an absolute value for the second pressure is determined, and subsequently both measured pressures are used to calculate the difference. Alternatively, the differential pressure between the first pressure sensing unit and the second pressure sensing unit may directly be measured. This has the advantage that the accuracy, i.e. the measurement error, is reduced.

Advantageously, the pressure sensing units comprise so called pressure taps, i.e. holes through the surface of the rotor blade and exposed to the outside air. Pressure taps are inexpensive and have exemplarily a diameter in the range of one millimeter. The device for determining the differential pressure between the two pressure sensing units, i.e. the pressure taps, may be a simple, small and low-cost device which is referred to as a differential pressure transducer. Note that the pressure transducer and/or the pressure sensing units may require protection against overpressure damage. Such damage may occur if pneumatic purging is applied to the pressure transducer and/or the pressure sensing units in order to clear pressure line blockages. Such blockages may occur if dirt, water or other small particles block any portion of the pressure transducer and/or the pressure sensing units.

A key advantage of the present invention is that noise can be detected and prevented at an early stage by a simple and reliable manner. This relates to the fact that elevated noise levels are often related to boundary layer flow separation. Another consequence of boundary layer separation is commonly a reduction of the power production by the wind turbine. Thus, additionally, the electrical performance can be enhanced by the inventive arrangement.

In an advantageous embodiment, the first pressure sensing unit is located at a chordwise position between 90 per cent of the chord length and 100 per cent of the chord length, as measured from the leading edge of the rotor blade.

The section of the rotor blade between 90 per cent of the chord length and 100 per cent of the chord length is referred to as the trailing edge section of the rotor blade. Depending on the airfoil design of the rotor blade it might be difficult to install and implement the first pressure sensing unit at such a position of the rotor blade. The difficulty with installing the first pressure unit close to the trailing edge is due to the fact that possibly the cavity inside the shell that surrounds the rotor blade is small or even non-existent at chordwise positions aft of 90 per cent. As an example, a placement of the first pressure sensing unit right at the trailing edge, i.e. at a chordwise position of 100 per cent as measured from the leading edge of the rotor blade, might be realized by integrating the first pressure sensing unit directly into the trailing edge.

In another embodiment, the second pressure sensing unit is located separately from the first pressure sensing unit upstream of the first pressure sensing unit by a chordwise distance between 5 per cent of the chord length and 50 per cent of the chord length. In particular, the second pressure sensing unit is located upstream of the first pressure sensing unit by a chordwise distance between 20 per cent of the chord length and 40 per cent of the chord length.

The given values in terms of chordwise positions for both pressure sensing units are advantageously chosen such that a meaningful and reliable differential pressure between the two pressure sensing units can be determined. Exemplarily, a placement of the first pressure sensing unit at 90 per cent of the chord length and a placement of the second pressure sensing unit at 70 per cent of the chord length has been proven to be well-suited for many of the typical industrial rotor blade shapes. However, note that the optimum position depends on the airfoil shape of the rotor blade and other factors such as the typical operating conditions of the rotor blade.

In another embodiment, the first pressure sensing unit and/or the second pressure sensing unit are located on the suction side of the rotor blade.

In principle both an arrangement located at the pressure side of the rotor blade and an arrangement located at the suction side of the rotor blade could be advantageous. In particular, if the airfoil has a symmetric shape - in other words, the pressure side has an identical curvature from the leading edge to the trailing edge as the suction side - a placement of the arrangement on either side or even on both sides seems possible. However, as a general rule, most rotor blades are particularly sensitive regarding flow separation of the boundary layer at the suction side.

In another embodiment, the first pressure sensing unit and/or the second pressure sensing unit are integrated in the shell of the rotor blade.

Integrating the pressure sensing units into the shell of the rotor blades comprises manufacturing a through hole through the entire shell. However, as, advantageously, pressure sensing units with a small diameter of a few millimeters or even less than one millimeter can be chosen, these through holes have a minor impact on the structure and the aerodynamics of the rotor blade. For instance, the through holes for integration of the pressure sensing units into the shell may be milled into the shell after manufacturing of the rotor blade.

In another embodiment, the device for measuring the differential pressure between the first pressure sensing unit and the second pressure sensing unit is located inside the cavity which is delimited by the shells of the rotor blade.

In other words, the cavity has to be understood as a hollow space inside the rotor blade surrounded by the blade shells. Due to reasons of aerodynamics and structure, the device for measuring the differential pressure is advantageously inside the cavity and attached to the inner shell of the rotor blade. Attachment may be carried out by an adhesive or by bolts or by screws or other suitable means.

In another advantageous embodiment, a plurality of first pressure sensing units and second pressure sensing units are arranged in the spanwise direction of the rotor blade.

This has to be understood as that at a given spanwise position a first pressure sensing unit and a second pressure sensing unit are located. Furthermore, at a different given spanwise position of the rotor blade another first pressure sensing unit and another second pressure sensing unit are located. This can be multiplied several times along a considerable spanwise extension of the rotor blade. As an example, the whole area from the root of the rotor blade until the tip of the rotor blade may be covered by pressure sensing units. Obviously, not the whole surface of the rotor blade is entirely covered by the pressure sensing units. However, by placing a considerable number of pairs of pressure sensing units along a considerable and relevant portion of the rotor blade, a detailed and comprehensive picture of flow separation at the rotor blade is obtained.

This is a key advantage of the present invention. Compared to conventional methods of detecting flow separation or, more generally, to characterize the boundary layer, by this embodiment of the present invention the boundary layer can be characterized locally at different given spanwise positions. This is highly advantageous both for a more theoretical understanding of the aerodynamics of the rotor blade but also to an optimized parameter setting and regulation of the operating wind turbine.

The invention is also directed towards a method of analyzing the boundary layer of a rotor blade for a wind turbine comprising the following steps:

- Determining the differential pressure between a first pressure sensing unit and a second pressure sensing unit;

- Comparing the determined differential pressure with a reference differential pressure by means of an evaluation unit, such that the boundary layer of the rotor blade can be characterized.

Note that features and embodiments which are described in the context of the arrangement may also be applied to the mentioned method and vice versa.

In an advantageous embodiment, the method further comprises optimizing the adjustment of the pitch angle of the rotor blade such that the performance of the rotor blade is optimized.

In other words, the rotor blade and the wind turbine as a whole can be operated more aggressively, thus the annual energy production is increased. This increase is possible due to a more detailed and more comprehensive understanding of flow separation along the rotor blade.

In another specific embodiment, the method further comprises the step of determining a measured pressure gradient based on a determined differential pressure and comparing the determined pressure gradient with a reference pressure gradient.

Comparing pressure gradients is an efficient and reliable way to detect and assess the boundary layer flow separation.

Finally, the invention is also related to the use of a method for determining whether the boundary layer of the rotor blade is separated at a predetermined chordwise position of the rotor blade. This is achieved by comparison of the determined differential pressure with a reference differential pressure by means of an evaluation unit.

Note that particularly for industrial type wind turbines the described arrangement, method and/or use is advantageous. This is due to the fact that for industrial applications characterization of the boundary layer at airfoil test samples is not sufficient. It is advantageous that the boundary layer is characterized and evaluated continuously such that operation of the wind turbine can frequently be changed or modified. Thus, having a plurality of pressure sensing units placed or distributed across the surface of the rotor blade is a significant advantage compared to state of the art rotor blades.

Embodiments of the invention are now described, by way of example only, with reference to the accompanying drawings, of which:

Figure 1        shows a wind turbine;

Figure 2        shows a rotor blade of a wind turbine;

Figure 3        shows a velocity profile of an airflow flowing across the rotor blade;

Figure 4        shows an arrangement for analyzing the boundary layer of a rotor blade;

Figure 5        shows a detailed view of such an arrangement;

Figures 6 and 7    show the normalized pressure differential depending on a chordwise position for the boundary layer in an attached and a detached state, respectively.

The illustration in the drawings is in schematic form. It is noted that in different figures, similar or identical elements may be provided with the same reference signs.

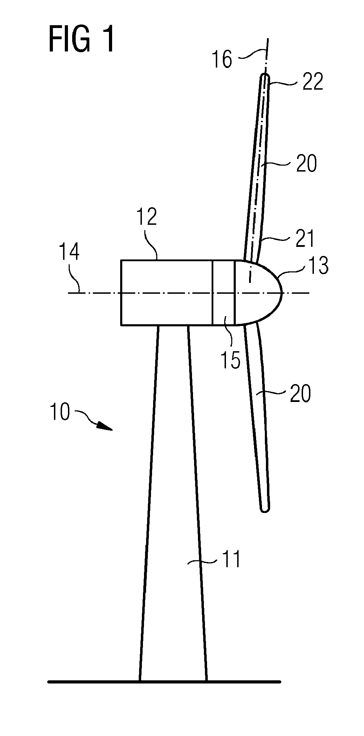

In Figure 1, a wind turbine 10 is shown. The wind turbine 10 comprises a nacelle 12 and a tower 11. The nacelle 12 is mounted at the top of the tower 11. The nacelle 12 is mounted rotatable with regard to the tower 11 by means of a yaw bearing. The axis of rotation of the nacelle 12 with regard to the tower 11 is referred to as the yaw axis.

The wind turbine 10 also comprises a hub 13 with three rotor blades 20 (of which two rotor blades 20 are depicted in Figure 1). The hub 13 is mounted rotatable with regard to the nacelle 12 by means of a main bearing. The hub 13 is mounted rotatable about a rotor axis of rotation 14.

The wind turbine 10 furthermore comprises a main shaft, which connects the hub 13 with a rotor of a generator 15. The hub 13 is connected directly to the rotor, thus the wind turbine 10 is referred to as a gearless, direct driven wind turbine. As an alternative, the hub 13 may also be connected to the rotor via a gearbox. This type of wind turbine is referred to as a geared wind turbine.

The generator 15 is accommodated within the nacelle 12. It comprises the rotor and a stator. The generator 15 is arranged and prepared for converting the rotational energy from the rotor into electrical energy.

Furthermore, the rotor blade 20 comprises a pitch axis 16 about which the rotor blade 20 can be rotated.

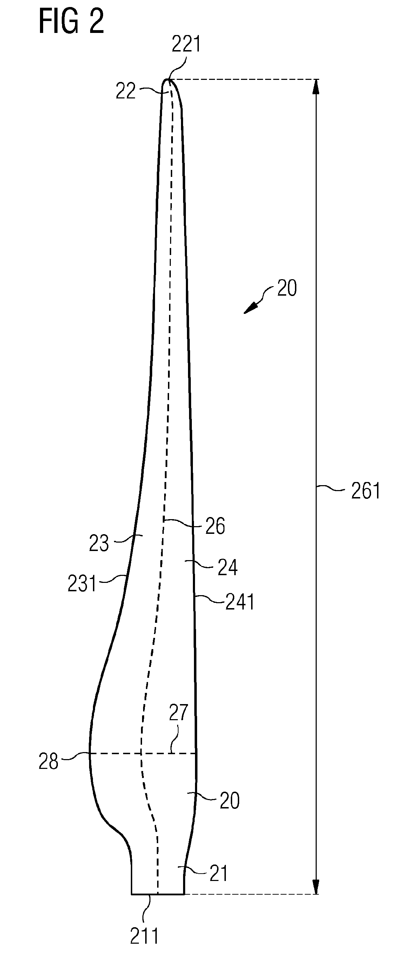

Figure 2 shows a rotor blade 20 of a wind turbine. The rotor blade 20 comprises a root section 21 with a root 211 and a tip section 22 with a tip 221. The root 211 and the tip 221 are virtually connected by the span 26 which follows the shape of the rotor blade 20. If the rotor blade were a rectangular shaped object, the span 26 would be a straight line. However, as the rotor blade 20 features a varying thickness, the span 26 is slightly curved or bent as well. Note that if the rotor blade 20 was bent itself, then the span 26 would be bent, too.

The rotor blade 20 furthermore comprises a leading edge section 24 with a leading edge 241 and a trailing edge section 23 with a trailing edge 231.

The trailing edge section 23 surrounds the trailing edge 231. Likewise, the leading edge section 24 surrounds the leading edge 241.

At each spanwise position, a chord line 27 which connects the leading edge 241 with the trailing edge 231 can be defined. Note that the chord line 27 is perpendicular to the span 26. The shoulder 28 is defined in the region where the chord line comprises a maximum chord length.

Furthermore, the rotor blade 20 can be divided into an inboard section which comprises the half of the rotor blade 20 adjacent to the root section 21 and an outboard section which comprises the half of the rotor blade 20 which is adjacent to the tip section 22.

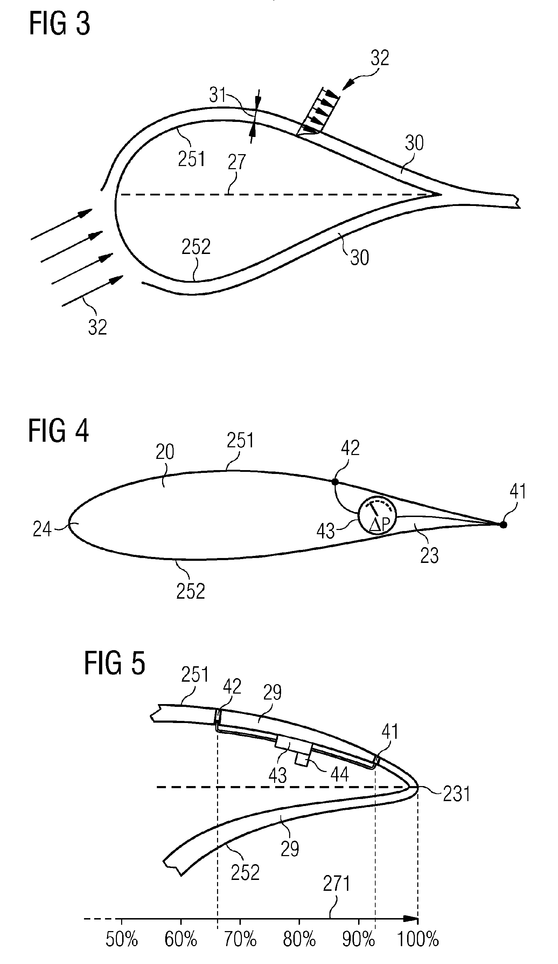

Figure 3 visualizes the boundary layer 30 of the rotor blade. A cross sectional view of the rotor blade, which is also referred to as an airfoil of the rotor blade, is depicted in Figure 3. It can be seen that the chord line 27 is a straight line connecting the leading edge 241 and the trailing edge 231. It also divides the surface of the rotor blade 20 into an upper section which is referred to as the suction side 251 and a lower section which is referred to as the pressure side 252. An airflow 32 impinges on the rotor blade 20 at the leading edge section 24 of the rotor blade 20. The chord line 27 and the direction of the airflow 32 may comprise an angle, which is commonly referred to as the angle of attack and which typically comprises a few degrees up to twenty or thirty degrees.

The velocity of the airflow 32 approaches zero if measured directly in close proximity to the surface. In a direction perpendicular to the surface the velocity of the airflow increases. If the velocity of the airflow reaches a value of exemplarily 95 per cent of the free stream velocity, the socalled limit of the boundary layer 30 is reached. In other words, the thickness of the boundary layer 31 is defined by the distance away of the surface of the rotor blade at which 99 per cent of the free stream velocity is reached. Typically, the thickness of the boundary layer 31 is in a range between a few millimeters and a few centimeters, for example up to 5 centimeters. The thickness of the boundary layer 31 is not equal along the entire cross section of the rotor blade. In the case of the embodiment of Figure 3 the boundary layer 30 is attached at the entire rotor blade from the leading edge 241 to the trailing edge 231. Under different conditions the boundary layer is detached at a certain chordwise position of, for instance, eighty per cent as measured from the leading edge 241.

Figure 4 shows an arrangement for analyzing the boundary layer. The arrangement comprises a first pressure sensing unit 41 and a second pressure sensing unit 42. These two pressure sensing units 41, 42 are connected to a device 43 which is arranged and prepared for determining the differential pressure at the given chordwise positions. Note that in Figure 4 the first pressure sensing unit 41 is located at the trailing edge, in other words at one hundred per cent chordwise position as measured from the leading edge 24. The second pressure sensing unit 42 is located upstream of the first pressure sensing unit 41. In other words, the second pressure sensing unit 42 is located at a different chordwise position compared to the first pressure sensing unit 41. The spanwise position of both pressure sensing units 41, 42 is substantially equal.

Figure 5 shows a detailed view of the trailing edge section of the rotor blade. The blade shell 29 can be seen. At the suction side 251 of the rotor blade two through holes through the shell 29 are provided. The first pressure sensing unit 41 is integrated in the first through hole while the second pressure sensing unit 42 is integrated in the second through hole. The spanwise position of both pressure sensing units 41, 42 is substantially equal. The chordwise position of the first pressure sensing unit 41 is approximately ninety-two per cent. The chordwise position of the second pressure sensing unit 42 is approximately sixty-six per cent. Both pressure sensing units 41, 42 are connected by a device 43 for determining the differential pressure. The device 43 is attached to the inner surface of the shell 29. The device 43 is furthermore connected with an evaluation unit 44. The evaluation unit 44 is capable to compare the determined differential pressure with a reference differential pressure. Thus, the boundary layer 30 of the rotor blade 20 can be characterized.

It is advantageous to measure or determine the pressure differential, $\Delta p$, by normalizing with a reference pressure. For applications of a substantially incompressible medium such as the airflow at wind turbines, this reference is the local dynamic pressure $q_{est}$. Thus, the relative differential pressure $\Delta C_p$ can be expressed as

$$\Delta C_p = \frac{\Delta p}{q_{est}}.$$

The local dynamic pressure $q_{est}$ can be calculated via

$$q_{est} = \frac{1}{2}\rho_\infty v_{rel}^2 = \frac{1}{2}\frac{p_\infty}{R_{air}T_\infty}\omega_{rotor}^2\left(r_{port}^2 + \frac{r_{tip}^2}{\lambda^2}\right)$$

wherein $p_\infty$ signifies the ambient air pressure, $T_\infty$ signifies the ambient air temperature, $R_{air}$ signifies the universal gas constant for air, $\omega_{rotor}$ signifies the rotational rate of the rotor, $r_{port}$ signifies the radial distance from the rotor center to the pressure sensing unit, $r_{tip}$ signifies the rotor radius, and $\lambda$ signifies the tip speed ratio. In the equation given above, it is assumed that the dynamic pressure is dominated by the rotational component of the relative wind velocity $v_{rel}$.

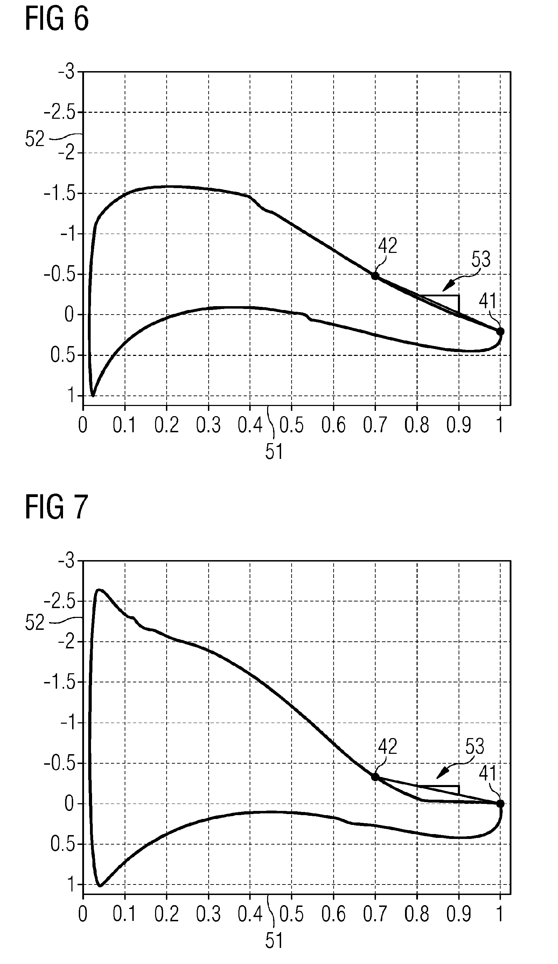

The Figures 6 and 7 each illustrate the normalized pressure differential 52 in dependence of the chordwise position 51. Figure 6 shows the normalized pressure differential 52 for a rotor blade with an attached boundary layer. Thus, no boundary layer separation takes place. Thus, the normalized pressure as measured by the second pressure sensing unit 42 is considerably lower than the pressure measured by the first pressure sensing unit 41. As a consequence, the pressure gradient 53 that is determined is relatively large.

Figure 7 shows the same airfoil as in Figure 6. However, in Figure 7 boundary layer separation occurs such that the pressure gradient 53 which is determined by comparison of the normalized pressure at the second pressure sensing unit 42 and the first pressure sensing unit 41 is small. By comparing the two pressure gradients 53 with and without boundary layer separation, consequences for the operation of the wind turbine can be drawn.

**Claims**

1. Arrangement for analyzing the boundary layer (30) of a rotor blade (20) for a wind turbine (10), wherein

   - the arrangement comprises a first pressure sensing unit (41) located at the trailing edge section (23) of the rotor blade (20), a second pressure sensing unit (42) located upstream of the first pressure sensing unit (41), and a device (43) for determining the differential pressure between the first pressure sensing unit (41) and the second pressure sensing unit (42), and
   - the arrangement comprises an evaluation unit (44), which is connected with the device (43), and which is arranged and prepared for comparing the determined differential pressure with a reference differential pressure, such that the boundary layer (30) of the rotor blade (20) is **characterized by** the evaluation unit (44).

2. Arrangement according to claim 1,
   wherein the first pressure sensing unit (41) is located at a chordwise position (51) between ninety per cent of the chord length (271) and hundred per cent of the chord length (271), as measured from the leading edge (241) of the rotor blade (20) .

3. Arrangement according to one of the preceding claims,
   wherein the second pressure sensing unit (42) is located separately from the first pressure sensing unit (41) upstream of the first pressure sensing unit (41) by a chordwise distance between five per cent of the chord length (271) and fifty per cent of the chord length (271), in particular between twenty per cent of the chord length (271) and forty per cent of the chord length (271).

4. Arrangement according to one of the preceding claims,
   wherein the first pressure sensing unit (41) and/or the second pressure sensing unit (42) are located on the suction side (251) of the rotor blade (20).

5. Arrangement according to one of the preceding claims,
   wherein the first pressure sensing unit (41) and/or the second pressure sensing unit (42) are integrated in the shell (29) of the rotor blade (20).

6. Arrangement according to one of the preceding claims,
   wherein a plurality of first pressure sensing units (41) and second pressure sensing units (42) are arranged in spanwise direction of the rotor blade (20).

7. Arrangement according to one of the preceding claims,

wherein the device (43) for measuring the differential pressure between the first pressure sensing unit (41) and the second pressure sensing unit (42) is located inside the cavity which is delimited by the shells (29) of the rotor blade (20) .

8. Method of analyzing the boundary layer (30) of a rotor blade (20) for a wind turbine (10) comprising the following steps:

- determining the differential pressure between a first pressure sensing unit (41) located at a trailing edge section (23) of the rotor blade (20) and a second pressure sensing unit (42) located upstream of the first pressure sensing unit (41), and
- comparing the determined differential pressure with a reference differential pressure by means of an evaluation unit (44), such that the boundary layer (30) of the rotor blade (20) is characterized.

9. Method according to claim 8,
wherein the method further comprises optimizing the adjustment of the pitch angle of the rotor blade (20) such that the performance of the rotor blade (20) is optimized.

10. Method according to one of the claims 8 or 9,
wherein the method further comprises

- determining a measured pressure gradient based on the determined differential pressure, and
- comparing the determined pressure gradient with a reference pressure gradient.

11. Use of a method according to one of the claims 8 to 10 for determining whether the boundary layer (30) of the rotor blade (20) is separated at a predetermined chordwise position (51) of the rotor blade (20) by comparison of the determined differential pressure with a reference differential pressure by means of an evaluation unit (44).

FIG 1

FIG 2

## FIG 3

## FIG 4

## FIG 5

## FIG 6

## FIG 7

Europäisches
Patentamt

European
Patent Office

Office européen
des brevets

# EUROPEAN SEARCH REPORT

Application Number

EP 14 19 5427

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/122669 A1 (GEN ELECTRIC [US]; XIONG WEI [US]; ZHANG DANIAN [US]; HUANG XIONGZHE []) 20 September 2012 (2012-09-20) | 1,2,4-11 | INV. G01M9/06 G01M5/00 |
| Y | * abstract * <br> * page 1 - page 15 * <br> * figures 1-16 * | 3 | F03D7/02 F03D11/00 |
| X | US 2010/101328 A1 (ENEVOLDSEN PEDER BAY [DK] ET AL) 29 April 2010 (2010-04-29) <br> * abstract * <br> * page 1 - page 4 * <br> * figures 1-4 * | 1,8 | |
| X | US 2012/024071 A1 (HERRIG ANDREAS [DE] ET AL) 2 February 2012 (2012-02-02) <br> * abstract * <br> * page 1 - page 5 * <br> * figures 1-10 * | 1,8 | |
| X | US 2010/266405 A1 (MAYDA EDWARD A [US]) 21 October 2010 (2010-10-21) | 1,8 | TECHNICAL FIELDS SEARCHED (IPC) |
| Y | * abstract * <br> * page 1 - page 3 * <br> * figures 1-6 * | 3 | F03D G01M G01L |
| A | US 2011/206507 A1 (BHAISORA SHAILESH SINGH [IN] ET AL) 25 August 2011 (2011-08-25) <br> * abstract * <br> * page 1 - page 6 * <br> * figures 1-6 * | 1-11 | |
| A | US 2010/076614 A1 (NIES JACOB JOHANNES [NL] ET AL) 25 March 2010 (2010-03-25) <br> * abstract * <br> * page 1 - page 13 * <br> * figures 1-12 * | 1-11 | |

-/--

The present search report has been drawn up for all claims

| Place of search | Date of completion of the search | Examiner |
|---|---|---|
| The Hague | 26 May 2015 | Ridha, Philipp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 19 5427

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 133 562 A2 (GEN ELECTRIC [US]) 16 December 2009 (2009-12-16) * abstract * * column 1 - column 8 * * figures 1-9 * ----- | 1-11 | |
| A | DE 31 06 624 A1 (DIETRICH REINHARD [DE]) 16 September 1982 (1982-09-16) * abstract * * page 1 - page 16 * * figures 1-4 * ----- | 1-11 | |

TECHNICAL FIELDS
SEARCHED        (IPC)

The present search report has been drawn up for all claims

| Place of search | Date of completion of the search | Examiner |
|---|---|---|
| The Hague | 26 May 2015 | Ridha, Philipp |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 19 5427

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2015

| Patent document cited in search report | | | Publication date | Patent family member(s) | | | Publication date |
|---|---|---|---|---|---|---|---|
| WO 2012122669 | A1 | | 20-09-2012 | CN<br>DE<br>US<br>WO | 103443454<br>112011105026<br>2014356165<br>2012122669 | A<br>T5<br>A1<br>A1 | 11-12-2013<br>02-01-2014<br>04-12-2014<br>20-09-2012 |
| US 2010101328 | A1 | | 29-04-2010 | CA<br>CN<br>EP<br>JP<br>US | 2683386<br>101725466<br>2180183<br>2010101316<br>2010101328 | A1<br>A<br>A1<br>A<br>A1 | 23-04-2010<br>09-06-2010<br>28-04-2010<br>06-05-2010<br>29-04-2010 |
| US 2012024071 | A1 | | 02-02-2012 | CN<br>EP<br>US | 102778330<br>2520919<br>2012024071 | A<br>A2<br>A1 | 14-11-2012<br>07-11-2012<br>02-02-2012 |
| US 2010266405 | A1 | | 21-10-2010 | AU<br>CA<br>EP<br>JP<br>JP<br>KR<br>KR<br>US<br>US<br>WO | 2010236656<br>2758840<br>2419631<br>2012524275<br>2014095717<br>20120006531<br>20140002089<br>2010266405<br>2012248256<br>2010120712 | A1<br>A1<br>A1<br>A<br>A<br>A<br>A<br>A1<br>A1<br>A1 | 17-11-2011<br>21-10-2010<br>22-02-2012<br>11-10-2012<br>22-05-2014<br>18-01-2012<br>07-01-2014<br>21-10-2010<br>04-10-2012<br>21-10-2010 |
| US 2011206507 | A1 | | 25-08-2011 | CN<br>DK<br>EP<br>ES<br>US | 102588205<br>2497944<br>2497944<br>2516092<br>2011206507 | A<br>T3<br>A1<br>T3<br>A1 | 18-07-2012<br>29-09-2014<br>12-09-2012<br>30-10-2014<br>25-08-2011 |
| US 2010076614 | A1 | | 25-03-2010 | CN<br>EP<br>US | 102052249<br>2320083<br>2010076614 | A<br>A2<br>A1 | 11-05-2011<br>11-05-2011<br>25-03-2010 |
| EP 2133562 | A2 | | 16-12-2009 | CN<br>EP<br>US | 101603500<br>2133562<br>2009311096 | A<br>A2<br>A1 | 16-12-2009<br>16-12-2009<br>17-12-2009 |
| DE 3106624 | A1 | | 16-09-1982 | NONE | | | |

EPO FORM P0459

For more details about this annex : see Official Journal of the European Patent Office, No. 12/82